# EUROPEAN PATENT APPLICATION

(11) **EP 4 391 251 A1**
(43) Date of publication of application: **26.06.2024**
(21) Application number: 22216315.6
(22) Date of filing: 23.12.2022
(51) Int. Cl.: H01S 3/00, H01S 3/10, G02F 1/01, H01S 3/13

(54) **RADIO FREQUENCY SIGNAL GENERATOR AND OPTICAL INTENSITY MODULATION APPARATUS**

(71) Applicant: NKT Photonics A/S, 3460 Birkerød (DK)
(72) Inventor: HENRIKSEN, Martin Romme, 3460 Birkerød (DK)
(74) Representative: Zacco Denmark A/S

(57) **Abstract**

A radio frequency, RF, signal generator (100) comprising an arbitrary waveform generator, AWG, (102) operative to generate an RF signal (110) comprising at least one pulse pair (112), each the pulse pair comprising a first pulse (114) and a second pulse (116), wherein each the pulse pair has an RF signal amplitude envelope (118) configured to compensate for an optical amplifier non-uniform gain response in the time domain.

## Description

### Technical Field

The invention relates to a radio frequency, RF, signal generator. The invention further relates to optical intensity modulation apparatus.

### Background

Optical systems for light-matter-interaction, such as quantum computing ion or atom traps, atomic clocks, atomic interferometers, and quantum gravimeters, require optical pulses with precisely controlled pulse parameters. Optical pulses can be formed using a directly modulated laser diode or by intensity modulation of a continuous wave, cw, optical signal using an optical modulator, such as an acousto-optic modulator, AOM, a Mach-Zehnder electro-optic modulator, MZM-EOM, or a semiconductor optical amplifier, SOA. An RF signal is provided to the optical modulator as a drive signal, which drives the optical modulator to intensity modulate the cw optical signal, to form the optical pulses.

### Summary

It is an object to provide an improved radio frequency, RF, signal generator. It is a further object to provide an improved optical intensity modulation apparatus.

An aspect provides a radio frequency, RF, signal generator comprising an arbitrary waveform generator, AWG, operative to generate an RF signal comprising at least one pulse pair, the pulse pair comprising a first RF signal pulse and a second RF signal pulse. The pulse pair has an RF signal amplitude envelope configured to compensate for an optical amplifier non-uniform gain response in the time domain.

The RF signal generator advantageously generates an RF signal which may be used as a drive signal for an optical modulator, to generate corresponding optical pulses which may then be amplified by an optical amplifier. Optical amplifiers typically have a non-uniform gain response in the time domain, caused by inversion depletion in the optical amplifier gain medium that occurs as a pulse propagates through the gain medium. The RF signal amplitude envelope of the RF signal pulse pair causes the optical modulator to generate optical pulses having a corresponding intensity/power envelope, so as to compensate for the non-uniform gain response of the optical amplifier experienced by the optical pulses propagating through the gain medium.

In an embodiment, the RF signal amplitude envelope has a leading edge and a trailing edge and wherein an amplitude of the RF signal increases between the leading edge and the trailing edge. The RF signal may advantageously be used as a drive signal for an optical modulator to generate corresponding optical pulses to be amplified by an optical amplifier having a non-uniform gain response in the time domain.

In an embodiment, the amplitude of the RF signal increases non-linearly over at least a portion of the RF signal amplitude envelope between the leading edge and the trailing edge. The RF signal may advantageously be used as a drive signal for an optical modulator to generate corresponding optical pulses to be amplified by an optical amplifier having a non-uniform gain response in the time domain.

In an embodiment, the amplitude of the RF signal increases substantially exponentially over at least a portion of the RF signal amplitude envelope between the leading edge and the trailing edge. The RF signal may advantageously be used as a drive signal for an optical modulator to generate corresponding optical pulses to be amplified by an optical amplifier having a non-uniform gain response in the time domain.

In an embodiment, each RF signal pulse has a leading edge and a trailing edge and wherein an amplitude of the RF signal increases between the leading edge and the trailing edge of each RF signal pulse. The RF signal may advantageously be used as a drive signal for an optical modulator to generate corresponding optical pulses to be amplified by an optical amplifier having a non-uniform gain response in the time domain.

In an embodiment, the RF signal amplitude of the first RF signal pulse increases from a first amplitude to a second, higher amplitude and the amplitude of the second RF signal pulse increases from a third amplitude to a fourth, higher amplitude, the third amplitude and the fourth amplitude being higher than the first amplitude and the second amplitude. The RF signal may advantageously be used as a drive signal for an optical modulator to generate corresponding optical pulses to be amplified by an optical amplifier having a non-uniform gain response in the time domain.

In an embodiment, in the first RF signal pulse the RF signal has a first phase and in the second RF signal pulse the RF signal has a second phase. There is a phase difference between the first phase and the second phase. The RF signal generator advantageously generates an RF signal which may be used as a drive signal for an optical modulator, to generate a pair of optical pulses having a phase difference between the optical pulses.

In an embodiment, the AWG is operative to generate the RF signal having an instantaneous phase change between the first RF signal pulse and the second RF signal pulse of the pulse pair.

In an embodiment, the first RF signal pulse and the second RF signal pulse of the pulse pair have a time gap between them. The AWG is operative to generate the RF signal with the phase change between the first RF signal pulse and the second RF signal pulse of the pulse pair occurring during said time gap.

In an embodiment, the AWG comprises interface circuitry, at least one processor and memory comprising instructions executable by said processor whereby the AWG is operative to determine the RF signal amplitude envelope, and generate the RF signal using the determined RF signal amplitude envelope.

In an embodiment, the AWG is additionally operative to receive an input signal including the RF signal amplitude envelope and to store the RF signal amplitude envelope in the memory. The AWG is operative to determine the RF signal amplitude envelope by retrieving the RF signal amplitude envelope from the memory. The AWG may advantageously be provided with an RF signal amplitude envelope obtained as a result of modelling of the optical amplifier gain response to be compensated.

In an embodiment, the AWG is additionally operative to receive an input signal including an optical amplifier gain response in the time domain. The AWG is operative to determine an RF signal amplitude envelope to compensate for the optical amplifier gain response, for a target optical pulse shape to be output from an optical amplifier having the optical amplifier gain response. The AWG is operative to generate the RF signal using the determined RF signal amplitude envelope. This advantageously enables the AWG to determine an RF signal amplitude envelope to compensate for a modelled or measured gain response of an optical amplifier.

In an embodiment, the AWG is additionally operative to receive an input signal including a detected optical pulse shape output from an optical amplifier. The AWG is operative to determine a difference between the detected pulse shape and a target pulse shape. The AWG is operative to determine an RF signal amplitude envelope to at least partly compensate for said difference. The AWG is operative to generate the RF signal using the determined RF signal amplitude envelope. This advantageously enables the AWG to determine an RF signal amplitude envelope to compensate for a non-uniform gain response of an optical amplifier, iteratively and in real-time.

In an embodiment, the RF signal generator further comprises an RF frequency multiplier for frequency multiplying the RF signal from the AWG.

In an embodiment, the RF signal comprises a train of pulse pairs. The RF signal may advantageously be used as a drive signal for an optical modulator to generate a corresponding train of optical pulse pairs.

In an embodiment, each pulse pair has a first duration and consecutive pulse pairs of the pulse train are separated by a time gap of a second duration, longer than the first duration. The RF signal may advantageously be used as a drive signal for an optical modulator to generate a corresponding train of optical pulse pairs having a dark time between pulse pairs that is longer than the duration of a pulse pair.

In an embodiment, wherein the second duration is at least 10 times the first duration, such as at least 100 times the first duration, such as substantially 1000 times the first duration. The RF signal may advantageously be used as a drive signal for an optical modulator to generate a corresponding train of optical pulse pairs having a long dark time between pulse pairs.

In an embodiment, the AWG is operative to generate the RF signal in response to receiving a trigger signal, the RF signal comprising a single pulse pair. The RF signal may advantageously be used as a drive signal for an optical modulator to generate a corresponding single optical pulse pair.

Corresponding embodiments and advantages also apply to the optical intensity modulation apparatus described below.

An aspect of the invention provides optical intensity modulation apparatus comprising an RF signal generator, an optical modulator and an optical amplifier. The RF signal generator comprises an arbitrary waveform generator, AWG, operative to generate an RF signal comprising at least one pulse pair, the pulse pair comprising a first RF signal pulse and a second RF signal pulse. The pulse pair has an RF signal amplitude envelope configured to compensate for an optical amplifier non-uniform gain response in the time domain. The optical modulator is configured to receive as a drive signal the RF signal from the RF signal generator and is operative to intensity modulate an optical signal to form at least one optical pulse pair, comprising a first optical pulse and a second optical pulse, wherein the optical pulse pair has an intensity envelope corresponding to the RF signal amplitude envelope of a respective pulse pair of the RF signal. The optical amplifier is configured to amplify the at least one optical pulse pair output from the optical modulator, to form at least one output optical pulse pair. The optical amplifier has said non-uniform gain response in the time domain.

The optical intensity modulation apparatus is advantageously operable to output an amplified optical pulse pair for which the non-uniform gain response of the optical amplifier has been pre-compensated by the shape of the optical pulse pair generated by the optical modulator, driven by the RF signal generated by the RF signal generator. Forming the optical pulse pair having a compensating intensity/power envelope may enable the optical modulation apparatus to compensate for pulse shape perturbations introduced by the optical amplifier non-uniform gain response, which may advantageously enable the optical modulation apparatus to form an output optical pulse pair, each pulse of the pair having a target pulse shape independent of such pulse shape perturbations.

An aspect of the invention provides an optical pulse source comprising a laser configured to provide a continuous wave, cw, optical signal and an optical intensity modulation apparatus as described above arranged to receive the cw optical signal from the laser and modulate the intensity of the received cw optical signal to generate one or more optical pulses. There are several advantages of generating the optical pulses by modulating the cw optical signal. One is that cw lasers, in particular cw fiber lasers, generally have superior optical properties compared e.g. to laser diodes. Another is that high high-speed modulators, such as Mach-Zehnder electro-optic modulators, can provide much faster and more precise modulation of the cw optical signal than a direct modulation of a laser diode, without introducing significant noise to the generated optical pulses.

Embodiments of the invention will now be described, by way of example only, with reference to the accompanying drawings.

### Brief Description of the drawings

Figures 1, 3, and 5 to 7 are block diagrams illustrating embodiments of an RF signal generator;
Figure 2 illustrates an RF signal pulse train generated by the RF signal generator of Figure 1;
Figure 4 illustrates an RF signal pulse pair generated by the RF signal generator of Figure 3;
Figures 8 and 11 are block diagrams illustrating embodiments of optical modulation apparatus;
Figure 9(a) shows an optical pulse pair output from the optical modulator (and input into the optical amplifier) of the optical modulation apparatus of Figure 8;
Figure 9(b) shows an optical pulse pair output from the optical amplifier of the optical modulation apparatus of Figure 8; and
Figure 10 shows (a) a square optical pulse pair input an optical amplifier having a non-uniform gain response, and (b) the resulting output optical pulse pair from the optical amplifier.

### Detailed description

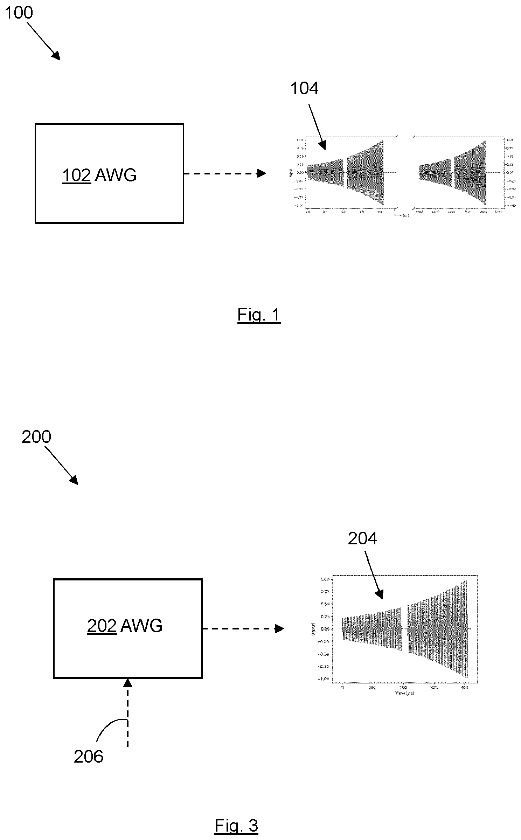

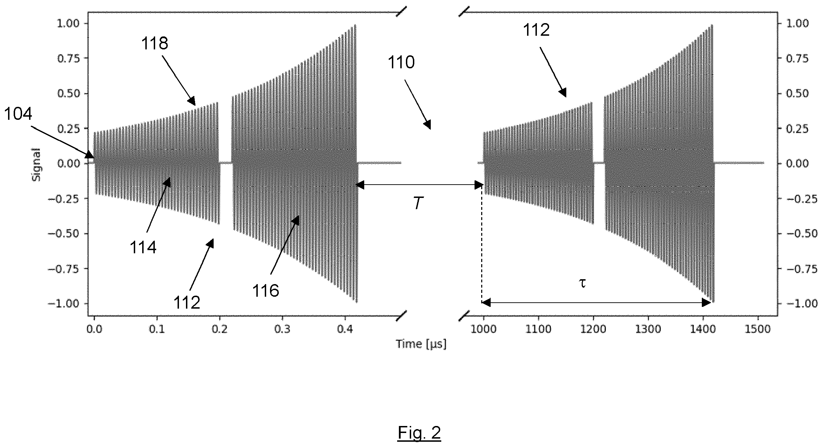

Referring to Figures 1 and 2, an embodiment provides a radio frequency, RF, signal generator 100 comprising an arbitrary waveform generator, AWG 102. The AWG is operative to generate an RF signal 104 comprising a train 110 of pulse pairs 112. Each pulse pair 112 comprises a first RF signal pulse 114 and a second RF signal pulse 116. Each pulse pair has an RF signal amplitude envelope 118 configured to compensate for an optical amplifier non-uniform gain response in the time domain.

The RF signal amplitude envelope describes how the RF signal amplitude of the pulse pair changes over the duration of the pulse pair, from the leading edge of the first RF signal pulse (which forms the leading edge of the RF signal amplitude envelope) to the trailing edge of the second RF signal pulse (which forms the trailing edge of the RF signal amplitude envelope); the RF signal amplitude envelope bridges the RF signal amplitude change between the pulses, i.e. the RF signal amplitude decrease at the trailing edge of the first RF signal pulse and the RF signal amplitude increase at the leading edge of the second RF signal pulse.

Each pulse pair 112 has a first duration, τ, and consecutive pulse pairs of the pulse train 110 are separated by a time gap, *T*, of a second duration; the time gap is the length of time between the trailing edge of the second RF signal pulse of one pulse pair and the leading edge of the first RF signal pulse of the next pulse pair.

In an embodiment, the time gap, *T*, is longer than the pulse pair duration, τ, so that the pulse train has a dark time between pulse pairs that is longer than the pulse pair duration.

In an embodiment, the time gap, *T*, between pulse pairs is at least 10 times the pulse pair duration, τ, so that the pulse train has a long dark time between pulse pairs.

In an embodiment, the time gap, *T*, between pulse pairs is at least 100 times the pulse pair duration, τ. For example, the time gap, *T*, between pulse pairs may be substantially 1000 times the pulse pair duration, τ.

For example, for a pulse pair duration, τ, of approximately 100 ns and a time gap, *T*, between pulse pairs of 1 ms, the pulse train has a ratio of on : off (i.e. RF signal pulses : no RF signal pulses) of 1 : 10000.

As can be seen in Figure 2, the RF signal amplitude envelope 118 of each pulse pair 112 has a leading edge (formed by the leading edge of the first pulse 114) and a trailing edge (formed by the trailing edge of the second pulse 116).

In an embodiment, the amplitude of the RF signal 104 increases between the leading edge and the trailing edge of the RF signal amplitude envelope.

In an embodiment, the amplitude of the RF signal increases non-linearly over at least a portion of the RF signal amplitude envelope between the leading edge and the trailing edge of the RF signal amplitude envelope.

In an embodiment, illustrated in Figure 2, the amplitude of the RF signal 104 increases substantially exponentially over at least a portion of the RF signal amplitude envelope between the leading edge and the trailing edge of the RF signal amplitude envelope.

In an embodiment, illustrated in Figure 2, each RF signal pulse 114, 116 has a leading edge and a trailing edge. The amplitude of the RF signal 104 increases between the leading edge and the trailing edge of each RF signal pulse.

In an embodiment, the RF signal amplitude of the first RF signal pulse 114 increases between its leading edge and its trailing edge from a first amplitude to a second, higher amplitude. The RF signal amplitude of the second RF signal pulse 116 increases between its leading edge and its trailing edge from a third amplitude to a fourth, higher amplitude. The third amplitude and the fourth amplitude are higher than the first amplitude and the second amplitude.

In an embodiment, illustrated in Figure 3, the RF signal amplitude of the first RF signal pulse 114 increases from 0.22V to 0.43V and the RF signal amplitude of the second RF signal pulse 116 increases from 0.47V to 1.00V

In an embodiment, in the first RF signal pulse the RF signal has a first phase and in the second RF signal pulse the RF signal has a second phase. There is a phase difference between the first phase and the second phase. For example, a π phase difference or a π/2 phase difference. The implemented phase difference may be selected depending upon a required phase difference between optical pulses of an optical pulse pair to be generated using the RF signal.

In an embodiment, the AWG 102 is operative to generate the RF signal 104 having an instantaneous phase change between the first RF signal pulse 114 and the second RF signal pulse 116 of each pulse pair 112.

In an embodiment, the first RF signal pulse 114 and the second RF signal pulse 116 of each pulse pair 112 have a time gap between them. The AWG 102 is operative to generate the RF signal 104 with the phase change between the first RF signal pulse and the second RF signal pulse of each pulse pair occurring during the respective time gap.

For example, the time gap may be in the range 10-20ns, or may be a fraction, such as 1/10^{th}, of the RF signal pulse width.

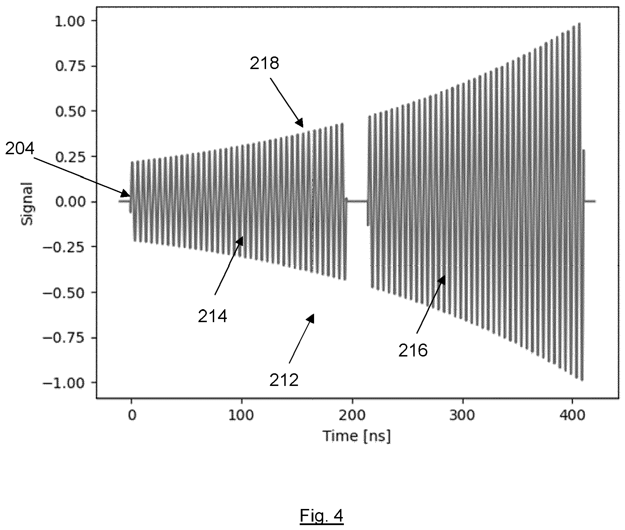

Referring to Figures 3 and 4, an embodiment provides an RF signal generator 200 comprising an AWG 202. The AWG is operative to generate an RF signal 204 comprising a single pulse pair 212. For example, the AWG may be operative at 12.5 Giga samples per second, to generate a sinusoidal RF signal 204 having a frequency of 2.5 GHz.

The AWG 202 is operative to generate the RF signal in response to receiving a trigger signal 206.

The trigger signal may be generated internally by the AWG 202 or may be received from an external optical system. For example, the trigger signal may be received from an external optical system to which optical pulses generated using the RF signal are to be delivered, such as a light-matter-interaction system. A time separated series of trigger signals may be received by the AWG, which is caused to generate a respective RF signal single pulse pair in response to each trigger signal.

The pulse pair 212 comprises a first RF signal pulse 214 and a second RF signal pulse 216. The pulse pair has an RF signal amplitude envelope 218 configured to compensate for an optical amplifier non-uniform gain response in the time domain.

As can be seen in Figure 4, the RF signal amplitude envelope 218 of the pulse pair 212 has a leading edge (formed by the leading edge of the first pulse 214) and a trailing edge (formed by the trailing edge of the second pulse 216).

In an embodiment, the amplitude of the RF signal 204 increases between the leading edge and the trailing edge of the RF signal amplitude envelope.

In an embodiment, the amplitude of the RF signal increases non-linearly over at least a portion of the RF signal amplitude envelope between the leading edge and the trailing edge of the RF signal amplitude envelope.

In an embodiment, illustrated in Figure 4, the amplitude of the RF signal 204 increases substantially exponentially over at least a portion of the RF signal amplitude envelope between the leading edge and the trailing edge.

In an embodiment, illustrated in Figure 4, each RF signal pulse 214, 216 has a leading edge and a trailing edge. The amplitude of the RF signal 204 increases between the leading edge and the trailing edge of each RF signal pulse.

In an embodiment, the RF signal amplitude of the first RF signal pulse 214 increases between its leading edge and its trailing edge from a first amplitude to a second, higher amplitude. The RF signal amplitude of the second RF signal pulse 216 increases between its leading edge and its trailing edge from a third amplitude to a fourth, higher amplitude. The third amplitude and the fourth amplitude are higher than the first amplitude and the second amplitude.

In an embodiment, illustrated in Figure 4, the RF signal amplitude of the first RF signal pulse 214 increases from 0.22V to 0.43V and the RF signal amplitude of the second RF signal pulse 216 increases from 0.47V to 1.0V

In an embodiment, in the first RF signal pulse the RF signal has a first phase and in the second RF signal pulse the RF signal has a second phase. There is a phase difference between the first phase and the second phase. This can be seen, for example, in Figure 4 in the change in the RF signal 204 between the trailing edge of the first RF signal pulse 214 and the leading edge of the second RF signal pulse 216. For example, a π phase difference or a π/2 phase difference. The implemented phase difference may be selected depending upon a required phase difference between optical pulses of an optical pulse pair to be generated using the RF signal.

In an embodiment, the AWG 202 is operative to generate the RF signal 204 having an instantaneous phase change between the first RF signal pulse 214 and the second RF signal pulse 216 of each pulse pair 212.

In an embodiment, the first RF signal pulse 214 and the second RF signal pulse 216 of the pulse pair 212 has a time gap between them. The AWG 202 is operative to generate the RF signal 204 with the phase change between the first RF signal pulse and the second RF signal pulse of the pulse pair occurring during the time gap.

For example, the time gap may be in the range 10-20ns, or may be a fraction, such as 1/10^{th}, of the RF signal pulse width.

An embodiment provides an RF signal generator 300 comprising an AWG 302. The AWG is operative to generate an RF signal comprising at least one pulse pair 112, 212 as described above.

The AWG comprises interface circuitry 306, a processor 308 and memory 310 comprising instructions 312. The instructions are executable by the processor such that the AWG is operative to determine the RF signal amplitude envelope and generate the RF signal using the determined RF signal amplitude envelope.

In an embodiment, the AWG 302 is additionally operative to receive an input signal including the RF signal amplitude envelope. The AWG is operative to store the RF signal amplitude envelope in the memory 310. The AWG is operative to determine the RF signal amplitude envelope by retrieving the RF signal amplitude envelope from the memory.

In an alternative embodiment, the AWG 302 is additionally operative to receive an input signal including an optical amplifier non-uniform gain response in the time domain. The AWG is operative to determine an RF signal amplitude envelope to compensate for the optical amplifier non-uniform gain response, for a target optical pulse shape to be output from an optical amplifier having the optical amplifier non-uniform gain response. The AWG is operative to generate the RF signal using the determined RF signal amplitude envelope.

In an alternative embodiment, the AWG 302 is additionally operative to receive an input signal including detected optical pulse shapes of the first optical pulse and second optical pulse of an optical pulse pair output from an optical amplifier. The AWG is operative to determine differences between the detected pulse shapes and a target pulse shape and to determine an RF signal amplitude envelope to at least partly compensate for the differences. The AWG is operative to generate the RF signal using the determined RF signal amplitude envelope.

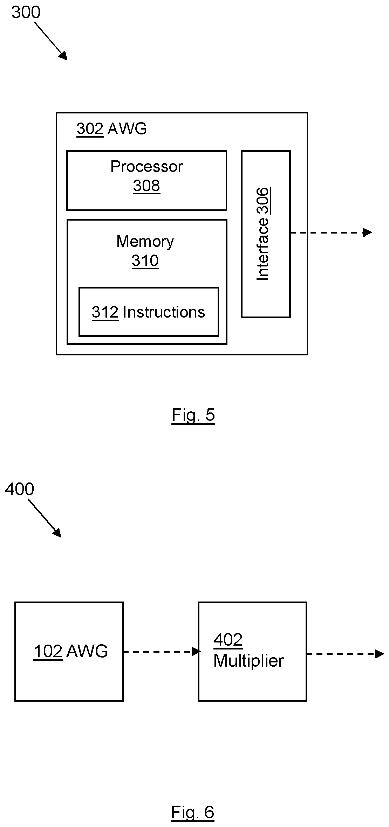

In an embodiment, illustrated in Figure 6, the RF signal generator 400 further comprises an RF frequency multiplier 402. The frequency multiplier is for frequency multiplying the RF signal output from the AWG. For example, the frequency multiplier may be a frequency doubler, for frequency doubling the RF signal output from the AWG.

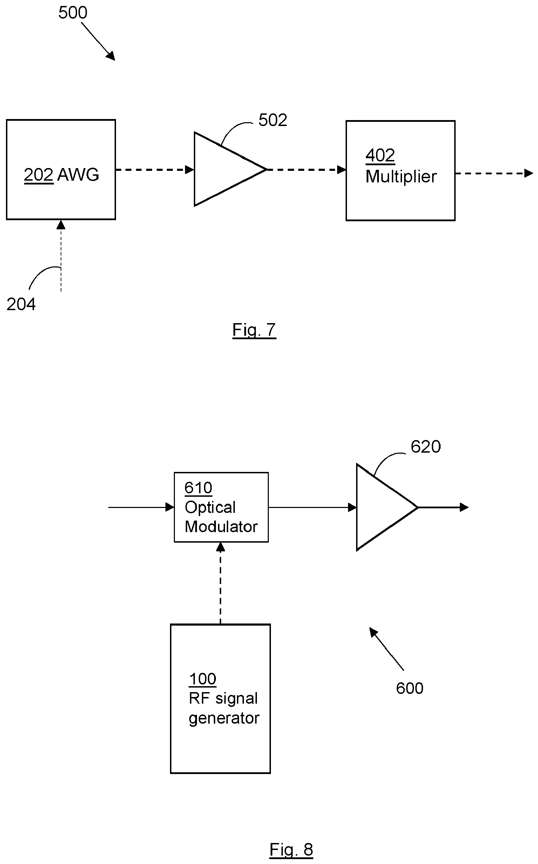

In an embodiment, illustrated in Figure 7, the RF signal generator 500 further comprises an RF amplifier 502, for amplifying the RF signal output from the AWG 202, before the RF frequency multiplier 402.

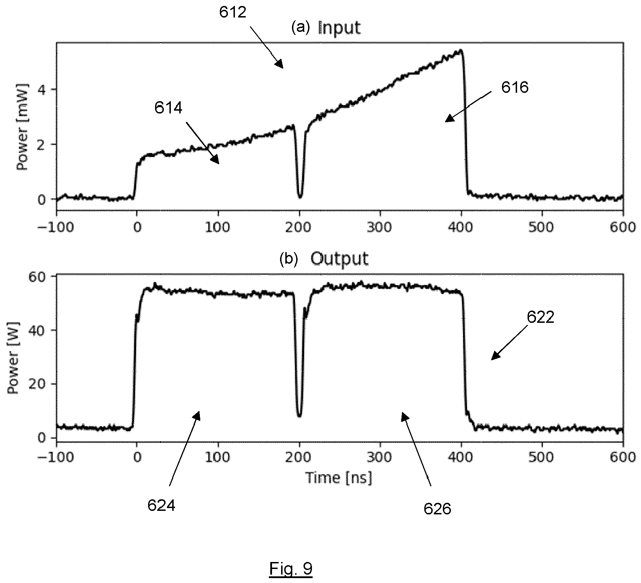

Referring to Figures 8 and 9, an embodiment provides optical intensity modulation apparatus 600 comprising an RF signal generator 100, as described above, an optical modulator 610 and an optical amplifier 620.

The optical modulator 610 is configured to receive, as a drive signal, the RF signal output from the RF signal generator 100. The optical modulator is operative to modulate an optical signal to form a train of optical pulse pairs corresponding to the train of RF signal pulse pairs output by the RF signal generator 100.

The optical amplifier 620 is configured to amplify optical pulse pairs output from the optical modulator, to form output optical pulse pairs. The optical amplifier has a non-uniform gain response in the time domain, which the RF signal amplitude envelope is configured to compensate for.

In an alternative embodiment, the optical intensity modulation apparatus 600 comprises an RF signal generator 200, as described above, an optical modulator 610 and an optical amplifier 620.

The optical modulator 610 is configured to receive, as a drive signal, the RF signal output from the RF signal generator 200. The optical modulator is operative to modulate an optical signal to form an optical pulse pair 612, comprising a first optical pulse 614 and a second optical pulse 616, as shown in Figure 9(a) (the input to the optical amplifier 620 is the same as the output from the optical modulator 610). The optical pulse pair 612 output from the optical modulator corresponds to the RF signal pulse pair 212 output by the RF signal generator 200. That is to say, the shape of the optical power envelope of the optical pulse pair 612 corresponds to the shape of the RF signal amplitude envelope of the RF signal pulse pair and the optical power of the first and second optical pulses 614, 616 increases in the same manner as the RF signal amplitude of the first and second RF signal pulses.

The optical amplifier 620 is configured to amplify the optical pulse pair 612, to form an output optical pulse pair 622, as shown in Figure 9(b). The optical amplifier has a non-uniform gain response in the time domain, which the RF signal amplitude envelope is configured to compensate for. Since the optical pulse pair 612 has a corresponding optical power envelope, the optical pulse pair is correspondingly configured to compensate for the non-uniform gain response of the optical amplifier. The resulting output optical pulses 624, 626 have substantially constant optical powers and may be described as 'square' or `top-hat' optical pulses.

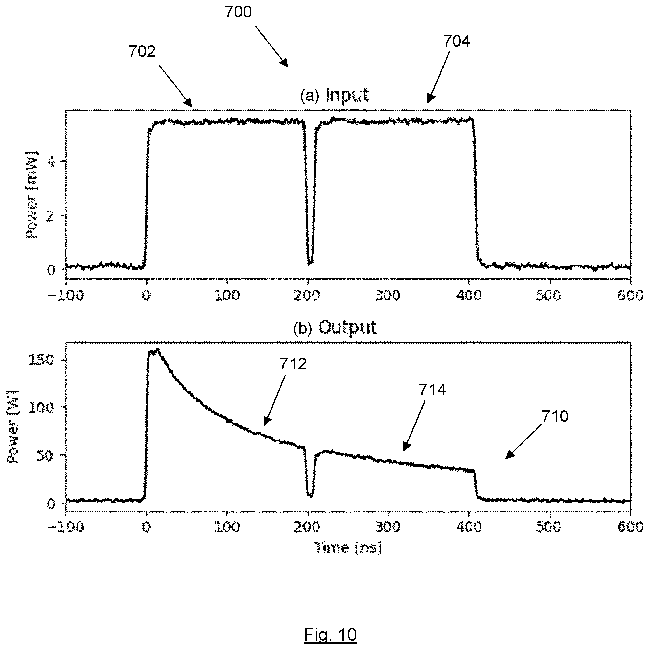

By way of contrast, Figure 10(b) illustrates an optical output pulse pair 710 that would be output from the optical amplifier 620 if a pair 700 of square optical pulses 702, 704, as shown in Figure 10(a), are input into the optical amplifier. That is to say, if the optical modulator 610 drive signal comprises a pair of square RF pulses, without an RF signal amplitude envelope configured to compensate for the optical amplifier's non-uniform gain response. The optical amplifier non-uniform gain response results in these "un-compensated" optical pulses 712, 714 having a non-uniform, decreasing optical power envelope.

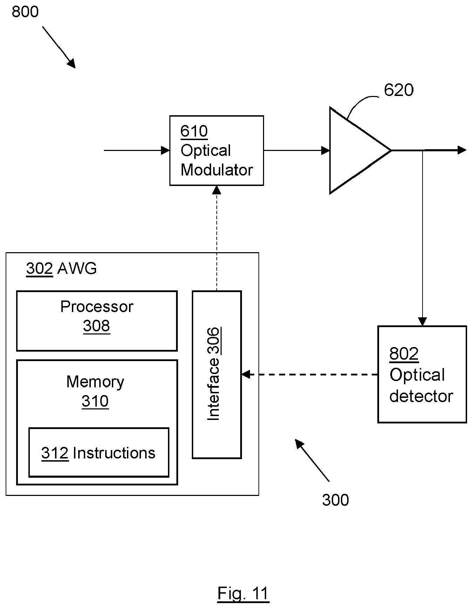

In an embodiment, illustrated in Figure 11, the optical intensity modulation apparatus 800 comprises an RF signal generator 300, as described above, an optical modulator 610, an optical amplifier 620 and an optical detector 802.

The optical detector 802 is configured to detect pulse shapes of the first optical pulse and second optical pulse of an optical pulse pair output by the optical amplifier. The optical detector is additionally configured to generate an output signal indicative of the detected optical pulse shapes. The AWG 302 is operative to receive, as its input, the output signal from the optical detector.

## Claims

1. A radio frequency, RF, signal generator (100, 200, 300, 400, 500) comprising:
an arbitrary waveform generator, AWG, (102, 202, 302) operative to generate an RF signal (104, 204) comprising at least one pulse pair (112, 212), the pulse pair comprising a first RF signal pulse (114, 214) and a second RF signal pulse (116, 216), wherein the pulse pair has an RF signal amplitude envelope (118, 218) configured to compensate for an optical amplifier non-uniform gain response in the time domain.

2. The RF signal generator of claim 1, wherein the RF signal amplitude envelope (118, 218) has a leading edge and a trailing edge and wherein an amplitude of the RF signal (104, 204) increases between the leading edge and the trailing edge.

3. The RF signal generator of claim 2, wherein the amplitude of the RF signal (104, 204) increases non-linearly over at least a portion of the RF signal amplitude envelope (118, 218) between the leading edge and the trailing edge.

4. The RF signal generator of claim 3, wherein the amplitude of the RF signal (104, 204) increases substantially exponentially over at least a portion of the RF signal amplitude envelope (118, 218) between the leading edge and the trailing edge.

5. The RF signal generator of any one of the preceding claims, wherein each RF signal pulse (114, 116, 214, 216) has a leading edge and a trailing edge and wherein an amplitude of the RF signal (104, 204) increases between the leading edge and the trailing edge of each RF signal pulse.

6. The RF signal generator of claim 5, wherein the RF signal amplitude of the first RF signal pulse (114, 214) increases from a first amplitude to a second, higher amplitude and the RF signal amplitude of the second RF signal pulse (116, 216) increases from a third amplitude to a fourth, higher amplitude, the third amplitude and the fourth amplitude being higher than the first amplitude and the second amplitude.

7. The RF signal generator of any one of the preceding claims, wherein in the first RF signal pulse (114, 214) the RF signal has a first phase and in the second RF signal pulse (116, 216) the RF signal has a second phase, there being a phase difference between the first phase and the second phase.

8. The RF signal generator of claim 7, wherein the AWG (102, 202, 302) is operative to generate the RF signal (104, 204) having an instantaneous phase change between the first RF signal pulse (114, 214) and the second RF signal pulse (116, 216) of the pulse pair (112, 212).

9. The RF signal generator of claim 8, wherein the first RF signal pulse (114, 214) and the second RF signal pulse (116, 216) of the pulse pair (112, 212) have a time gap between them and wherein the AWG (102, 202, 302) is operative to generate the RF signal with the phase change between the first RF signal pulse and the second RF signal pulse of the pulse pair occurring during said time gap.

10. The RF signal generator of any one of the preceding claims, wherein the AWG (302) comprises interface circuitry (306), at least one processor (308) and memory (310) comprising instructions (312) executable by said processor whereby the AWG is operative to:
- determine the RF signal amplitude envelope (118, 218); and
- generate the RF signal (104, 204) using the determined RF signal amplitude envelope.

11. The RF signal generator of claim 12, wherein the AWG (302) is additionally operative to receive an input signal including the RF signal amplitude envelope (118, 218) and to store the RF signal amplitude envelope in the memory, and wherein the AWG is operative to determine the RF signal amplitude envelope by retrieving the RF signal amplitude envelope from the memory.

12. The RF signal generator of claim 12, wherein the AWG (302) is additionally operative to:
- receive an input signal including an optical amplifier gain response in the time domain;
- determine an RF signal amplitude envelope (118, 218) to compensate for the optical amplifier gain response, for a target optical pulse shape to be output from an optical amplifier having the optical amplifier gain response; and
- generate the RF signal (104, 204) using the determined RF signal amplitude envelope.

13. The RF signal generator of claim 12, wherein the AWG (302) is additionally operative to:
- receive an input signal including detected optical pulse shapes of the first optical pulse and second optical pulse of an optical pulse pair output from an optical amplifier;
- determine differences between the detected pulse shapes and a target pulse shape;
- determine an RF signal amplitude envelope (118, 218) to at least partly compensate for said differences; and
- generate the RF signal (104, 204) using the determined RF signal amplitude envelope.

14. The RF signal generator of any one of claims 1 to 13, further comprising an RF frequency multiplier (402) for frequency multiplying the RF signal from the AWG (102, 202, 302).

15. The RF signal generator of any one of claims 1 to 14, wherein the RF signal (104) comprises a train of pulse pairs (112).

16. The RF signal generator of claim 15, wherein each pulse pair (112) has a first duration and consecutive pulse pairs of the pulse train are separated by a time gap of a second duration, longer than the first duration.

17. The RF signal generator of claim 16, wherein the second duration is at least 10 times the first duration, such as at least 100 times the first duration, such as substantially 1000 times the first duration.

18. The RF signal generator of any one of claims 1 to 14, wherein the AWG (202) is operative to generate the RF signal (204) in response to receiving a trigger signal, the RF signal (204) comprising a single pulse pair (212).

19. Optical intensity modulation apparatus (600, 800) comprising:
an RF signal generator (100, 200, 300, 400, 500) as claimed in any one of the preceding claims;
an optical modulator (610) configured to receive as a drive signal the RF signal (104, 204) from the RF signal generator and operative to intensity modulate an optical signal to form at least one optical pulse pair (616), comprising a first optical pulse (614) and a second optical pulse (616), wherein the optical pulse pair has an intensity envelope corresponding to the RF signal amplitude envelope (118, 218) of a respective pulse pair (112, 212) of the RF signal; and
an optical amplifier (620) configured to amplify the at least one optical pulse pair output from the optical modulator, to form at least one output optical pulse pair (622), wherein the optical amplifier has said non-uniform gain response in the time domain.
